# EUROPEAN PATENT APPLICATION

(11) **EP 4 589 361 A1**
(43) Date of publication of application: **23.07.2025**
(21) Application number: 24425001.5
(22) Date of filing: 19.01.2024
(51) Int. Cl.: G02B 27/00

(54) **EYEWEAR WITH EYE-TRACKING SYSTEM**

(71) Applicant: Luxottica S.r.l., 32021 Agordo (Belluno) (IT)
(72) Inventor: CARMINATI, Marco, 20137 Milano (MI) (IT); NATALI, Dario Andrea Nicola, 24129 Bergamo (BG) (IT); CRAFA, Daniele Maria, 20068 Peschiera Borromeo (MI) (IT); MERIGO, Luca, 25030 Roccafranca (BS) (IT); ONGARELLO, Tommaso, 35142 Padova (PD) (IT)
(74) Representative: Zanardo, Giovanni

(57) **Abstract**

Eyewear (100) comprising: - a frame (110) comprising a front (111), two temples (112, 113) coupled to the front (111) and at least one lens (114, 115) coupled to the front (111); - an eye-tracking system (200) associated to the frame (110);
characterized in that the eye-tracking system (200) comprises: - at least one infrared radiation source (210, 211) coupled to the frame (110) so as to face and emit infrared radiation towards a respective eye to be tracked of a user when such a user wears the eyewear (100); - a plurality of infrared photodetectors (220) coupled to the edge of the at least one lens (114, 115), said infrared photodetectors (220) being configured to detect the optical signal reflected by the eye to be tracked and generate a respective an electric detection signal; - a processing and control unit (230) associated to the at least one infrared radiation source (210, 211) and to the plurality of infrared photodetectors (220), said processing and control unit (230) being configured to activate the at least one infrared radiation source (210, 211) so as to emit the infrared radiation, to receive the electric detection signals and to to estimate the direction of the gaze of the eye to be tracked on the basis of said received electric detection signals; - a battery (240) associated to the processing and control unit (230), the infrared photodetectors (220) and to the at least one infrared radiation source (210, 211) so as to electrically supply them.

## Description

The present invention refers to eyewear, in particular smart eyewear comprising an eye-tracking system.

Smart eyewear encompasses any type of device designed to be worn over at least one eye of a wearer and having a frame configured to be mounted on a head, including any head-mountable device.

As known, smart eyewear comprise electronic devices adapted to operate as an electronic calculator capable of supporting the activities carried out by the user wearing them.

In more details, the electronic devices are capable of playing audio and video, launch and run software application, recognize shapes and objects placed in the surrounding environment.

More in particular, the electronic devices usually comprise a processing and control unit and sensors integrated into the spectacle frame or temples.

For example, it is known to provide smart eyewear with an eye-tracking systems in order to activate/deactivate some functionalities of the smart eyewear, for example for augmented and mixed reality, and/or monitoring the movement of the eye for medical, psycological, commercial and marketing purposes, e.g. for tracking the direction of the gaze towards a shop window or a supermarket shelf.

Several different type eye-tracking systems are currently known.

An eye-tracking system of a first type, which is the most widely used, comprises one or more sources for illuminating the eye under tracking and one or more cameras for capturing the movement of the eye. Such a system is, however, bulky and therefore cannot be embedded in smart eyewear that must appear identical to the common eyewear.

In view of this drawback an eye-tracking system of a second type is becoming more attractive, which comprise infrared and/or near-infrared wavelengths source that illuminate the eye to be tracked and detectors to detect the optical signal reflected by the illuminated eye; in these systems the direction of the gaze is obtained on the basis of the detected optical signal. Since these systems operate at infrared and/or near-infrared wavelengths that are outside the sensitivity range of the human-eye and therefore does not interfere with the sight capacity.

In the present description for infrared wavelengths it is intended to indicate wavelengths comprised between 700nm and 1mm.

For near-infrared wavelengths it is intended to indicate wavelengths comprised between 700nm and 10µm. US 10,521,658 B2, US 11,256,086 B2, US10,606,071 B1, US 10,481,687 B1 describe examples of eye-tracking system of the second type that use optical element like dichroic mirror, gratings to couple the light reflected by the eye with the detectors. This involve a very complex and very expensive production of such systems. Moreover, such eye-tracking system provide a substantial modification of the appearance of the eyewear.

The object of the present invention is to overcome the above-mentioned drawbacks and in particular to devise an eyewear with an eye-tracking system which is simpler to be manufactured and cheaper with respect to the prior art.

Another object of the present invention is to devise an eyewear with an eye-tracking system that has the same appearance of a normal non-smart eyewear.

This and other objects according to the present invention are achieved by making a eyewear with an eye-tracking system as set forth in claim 1.

Further characteristics of the eyewear with an eye-tracking system are the objects of the dependent claims.

The characteristics and advantages of the eyewear with an eye-tracking system according to the present invention will be more evident from the following exemplary though non-limiting description, referring to the attached schematic drawings in which:

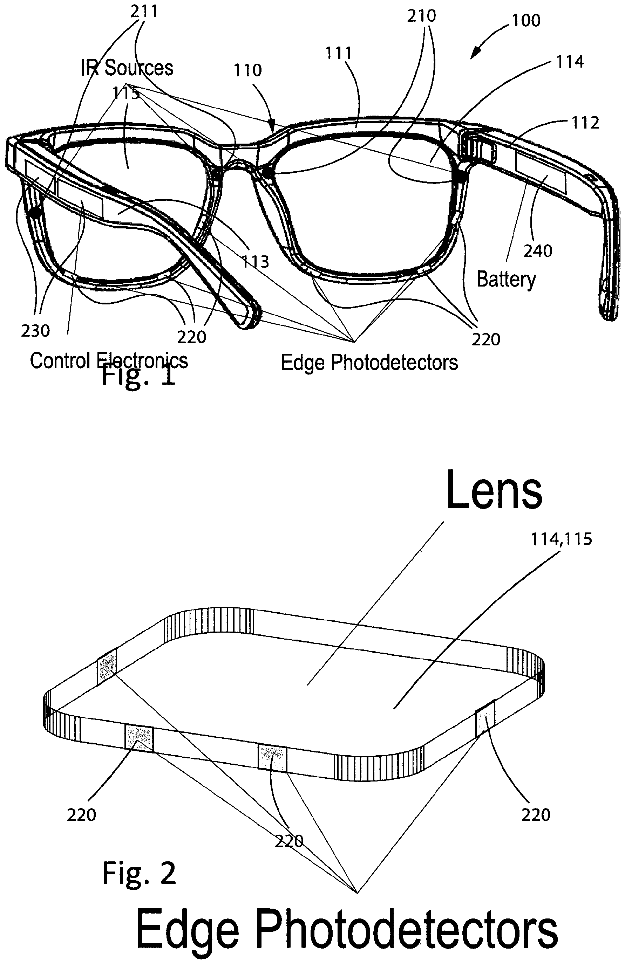

- Figure 1 is a schematic perspective view of an eyewear according to the present invention;
- Figure 2 is a schematic perspective view of a lens coupled to a plurality of photodetectors included in an eyewear according to the present invention;

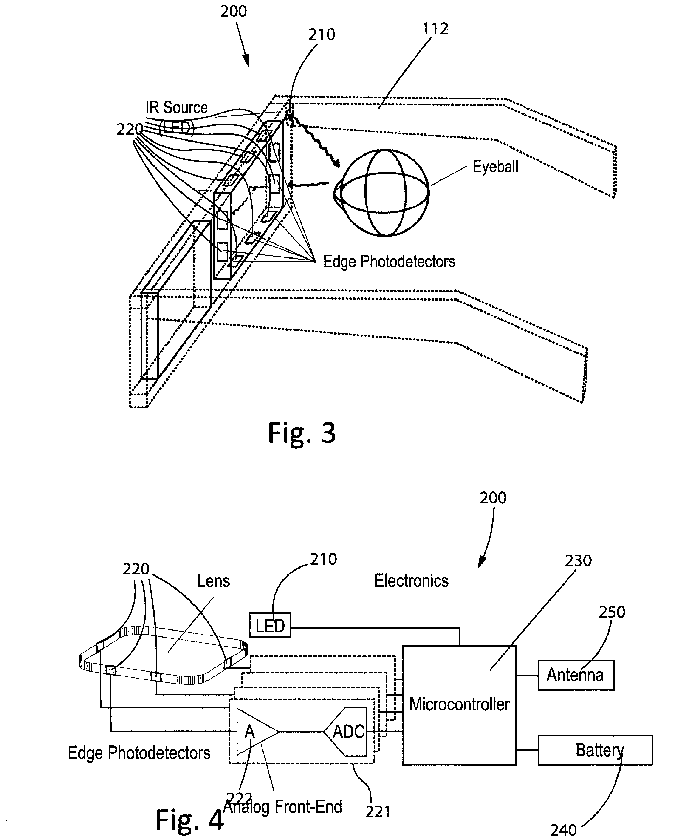

- Figure 3 is a schematic perspective view that illustrates the operation of an eyewear according to the present invention;
- Figure 4 is a block scheme representing the electronic devices included in the eyewear according to the present invention
- Figure 5a is a schematic perspective view of a lens coupled to a plurality of photodetectors used for experimental test;
- Figure 5b is a schematic representation of an experimental setup used for experimental test on the lens illustrated in figure 5a;
- Figure 5c show experimental maps of the light collected by the photodetectors by varying the orientation of the movable IR LED comprised in the experimental setup of Figure 5b, that is by varying angles of azimuth (θ) and yaw (ϕ) (shown in Figure 5b) with respect to a vertical axis aligned with the middle of the lens in the polar reference system shown in gifure 5b.

With reference to the figures, an eyewear is shown, globally referred to as 100.

The eyewear 100 comprises a frame 110 which comprises a front 111, two temples 112, 113 coupled to the front 111 and at least one lens 114, 115 coupled to the front 111. For example, the eyewear is an eyeglass and in this case it can comprise two lenses; the eyewear 100 can be a also a ski-mask or a mask sunglass and in this case it can comprise a single lens.

The eyewear 100 advantageosuly comprises an eye-tracking system 200 associated to the frame 110. The eye-tracking system 200 comprises at least one infrared radiation source 210, 211 coupled to the frame 110 so as to face and emit infrared radiation towards a respective eye to be tracked of a user when such a user wears the eyewear 100.

In the illustrated embodiments, there are two infrared radiation sources 210, 211 one for each respective eye. However, the eye to be tracked may be just one of the two eyes of a user and in this case the eye-tracking system 200 preferably comprises just one infrared radiation source.

In any case, the at least one infrared radiation sources 210, 211 must be directed towards the eye to be tracked.

For example the at least one infrared radiation sources 210, 211 is a LED.

The eye-tracking system 200 comprises also a plurality of infrared photodetectors 220 optically coupled to the at least one lens 114, 115.

For optically coupled it is meant that the infrared photodetectors are arranged so as to allow the transmission of light from the at least one lens 114, 115 to the infrared photodetectors 220.

In particular, the infrared photodetectors can be mechanically coupled to the edge of the at least one lens 114, 115 or to the inner edge of the front 111 of the frame 110 facing the edge of the at least one lens 114, 115.

The infrared photodetectors 220 are configured to detect the optical signal reflected by the eye to be tracked at the infrared wavelengths, preferably at near-infrared wavelengths, more preferably around 850nm; such infrared photodetectors 220 are also configured to generate a respective an electric detection signal.

For example the infrared photodetectors 220 may be made as solid-state semiconductor photodetectors, for example as photodiodes. For example infrared photodetectors 220 may be made of silicon or other semiconductors, or other materials such as solutionprocessable ones.

The electric detection signals generated by infrared photodetectors 220 may be analog.

In particular, the electric detection signals generated by infrared photodetectors 220 may be analog current detection signals.

The infrared photodetectors 220 may be connected to an analog signal converter circuit 222 converting the analog current detection signals into an analog voltage detection signals. The output of this analog signal converter circuit 222 may be connected to an analog-to-digital (ADC) converter 221 configured to convert the analog electric detection signals into digital electric detection signals.

More in general, the presence of the analog signal converter circuit 222 and of the ADC converter 221 are not related to each other. Indeed in some embodiments the analog signal converter circuit 222 is not present and the the infrared photodetectors 220 may be connected directly to the ADC converter 221. In other embodiments, the analog signal converter circuit 222 is present and the ADC converter 221 is not present. In other embodiments both the analog signal converter circuit 222 and the ADC converter 221 are not present. Moreover, the analog signal converter circuit 222, if present, and the ADC converter, if present, can be embedded into the photodetector 220 or they can be external with respect to the photodetector 220 to which it is associated. If the eventually present analog signal converter circuit 222 and the eventually present ADC converter 221 are embedded into the photodetector 220, the electric detection signals generated by infrared photodetectors 220 are digital.

In the eyewear, according to the present invention, the at least one lens 114, 115 acts as an optical waveguide guiding towards the edges a fraction of the infrared light impinging on the lens after being reflected by the eye illuminated by the at least one infrared radiation sources 210, 211.

The eye-tracking system 200 comprises also a processing and control unit 230 associated to the at least one infrared radiation source 210, 211 and to the plurality of infrared photodetectors 220. In particular the processing and control unit 230 is configured to activate the at least one infrared radiation source 210, 211 so as to emit the infrared radiation, to receive the electric detection signals and to estimate the direction of the gaze of the eye to be tracked on the basis of the received electric detection signals. For example the processing and control unit 230 is a microcontroller but more in general it can be made of either analog or digital circuits.

If the processing and control unit 230 is made of analog circuits the ADC converter 221 is not present and the processing and control unit 230 receives analog electric detection signals, whereas if the processing and control unit 230 is made of digital circuits the ADC converter 221 must be present, embedded or external with respect to the infrared photodetectors 220, and the processing and control unit 230 receives digital electric detection signals. Therefore, the electric detection signals received by the processing and control unit 230 may be analog or digital signals obtained as previously described. Therefore, by saying that the processing and control unit 230 is associated to the plurality of infrared photodetectors 220 it is intended to mean that the processing and control unit 230 may be directly or undirectly connected to the infrared photodetectors 220 depending on the eventually presence of the analog signal converter circuit 222 and of the ADC converted 221.

The processing and control unit 230, in particular, can comprise an internal memory (not illustrated) wherein a computer program is loaded; such a computer program implements an algorithm to estimate the direction of the gaze of the eye to be tracked on the basis of the received electric detection signals.

For example such an algorithm can be a supervised machine learning algorithm that can be represented by an artificial neural network (ANN) comprising a plurality of nodes, called artificial neurons, interconnected to each other by means of branches, called artificial synapses. The ANN will be not described since it is known in the state of the art. The algorithm implemented in the processing and control unit 230 is, preferably, trained by means of a dataset of maps of light signals of suitable size. The dataset can be composed of both simulated and experimental data generated with a known direction of gaze. The latter can be automatically acquired, for instance, by means of an artificial eye with a similar response in the infrared spectrum to the human eye. The artificial eye can be mounted on a motor-actuated stage whose position may be scanned thorough a dense grid of points identified by a couple of angles, in particular elevation and azimuth angles, defining the direction of gaze. The training allows to determine the weights of the ANN that are stored in the internal memory in order to run the eye tracking estimation in real time, with typical temporal resolution down to millisecond range.

Therefore, the training process of the algorithm implemented by the computer program stored in the internal memory of the processing and control unit 230 comprises the following steps:
- performing the experimental dataset acquisition step which provides the steps:
   - providing an eyewear 100 equipped with the eye-tracking system 200;
   - providing an artificial eye mounted on a support so as to be rotatable around two rotational axes according to a plurality of poses defined by a respective elevation angle or a pitch angle and a respective azimuth angle or yaw angle;
   - arranging the eyewear 100 in front of the artificial eye;
   - scanning a dense grid of points in the space of angles, i.e. couples of elevation and azimuth angles in the range of angles to be estimated by the eye-tracker system 200 and for each point acquiring the electric detection signals from the infrared photodetectors 220;
- training the algorithm by using a fraction of the acquired experimental dataset,i.e. finding the optimal values of its hyperparameters, and by using and another fraction of the acquired experimental dataset for validation.

Once the training process has ended, the optimal validated parameters for example the weights of the ANN, are loaded in the computer program.

The eye-tracking system 200 comprises also a battery 240 associated to the processing and control unit 230, the infrared photodetectors 220 and to the at least one infrared radiation source 210, 211 so as to electrically supply them.

The eye-tracking system 200 may also comprise a wireless communication module 250 associated to the processing and control unit 230 configured to communicate in a wireless manner with an electronic terminal, such as a smartphone.

The performance of the estimation of the gaze direction and other eye parameters, like blink or pupil diameter depends on the number of the infrared photodetectors and their position. The optimal position is obtained through numerical simulation. In particular, it is possible to change the number and the position of the at least one infrared radiation source 210, 211 and of the infrared photodetectors 220 by means of optical simulations in order to maximise the amount of light collected by the infrared photodetectors 220 and the spatial resolution, i.e. the sensitivity of the collected light maps to the direction of gaze.

The number of photodetectors 220 determines not only the angular resolution of the calculation of the gaze direction but also the value of the power consumption and dissipation. In particular the largest is the number of photodetectors 220 the largest is such an angular resolution but at the same time the largest is the value of the power consumption and dissipation.

It is necessary to establish a number of photodetectors which represents a compromise between the need of sufficiently high angular resolution and sufficiently low power consumption and dissipation.

Preferably the infrared photodetectors 220 are at least three.

More preferably the infrared photodetectors 220 are four.

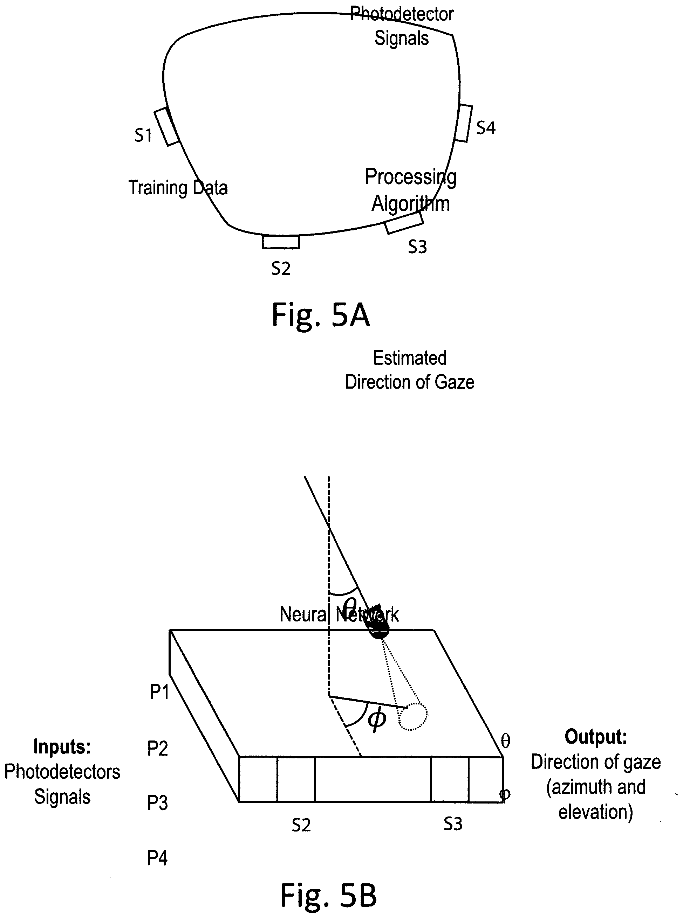

Figure 5b shows an example of an experimental setup used for the validation of the results obtained by the described eye-tracking system. Such experimental setup provides a standard lens with four infrared semiconductor photodetectors (S1, S2, S3 and S4) coupled to the edges of the lens as the one illustrated in Figure 5a. The reflection of the IR light from the eye is simulated by a movable beam produced by an IR LED with a narrow emission profile directed toward the lens.

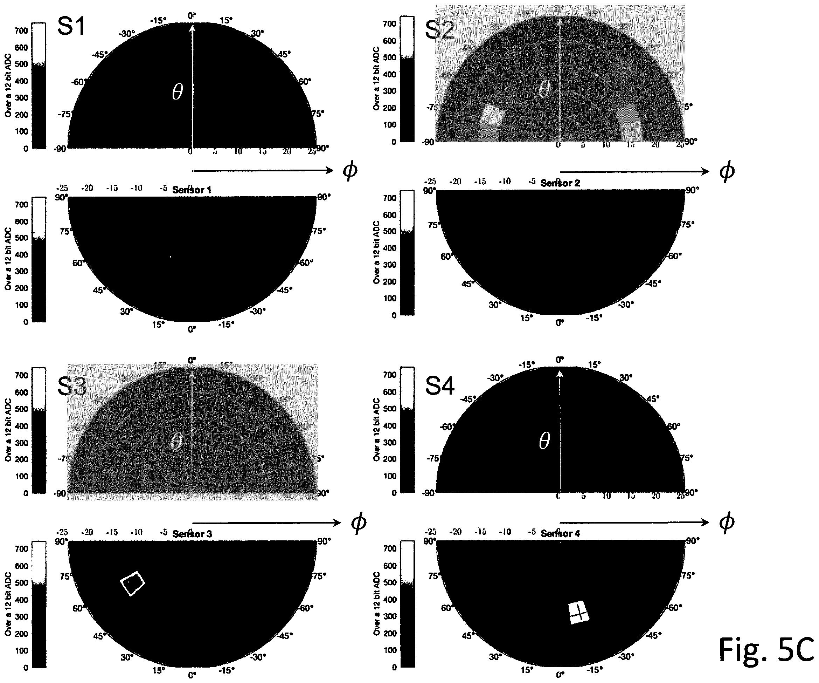

The maps of Figure 5c show the light signals collected by the four photodetectors when scanning the surface of the lens along the two angles of azimuth (θ) and yaw (ϕ) with respect to a vertical axis aligned with the middle of the lens in the polar reference system shown in gifure 5b. These maps demonstrate the position sensitivity of the eye-tracking system of the present invention and represent an example of the data fed as inputs to the algorithm estimating the direction of gaze.

For example the maps show that the photodetector S1 is sensitive to gaze directions with θ comprised from -10° and -20°and ϕ comprised from -30° and +30°, whereas the photodetector S2 is sensitive to θ comprised from +10° and +20°and ϕ comprised from +30° and +150°and from - 45° to -120° and so on. For each angle region, at least one sensor S1, S2, S3, S4 detects a signal.

Preferably the processing and control unit 230 and the battery 240 are mounted in two different temples 112, 113. However they can be also mounted inside the same temple 112, 113 or inside the front 111.

In any case the interconnections between the infrared photodetectors 220, the at least one infrared source 210, the processing and control unit 230 and the battery may be achieved by means of wires or flexible printed circuit boards PCBs.

In a particular embodiment the battery 240 comprises a system of photovoltaic cells adapted to recharge the battery 240.

Preferably, the photodetectors have a transversal size comprised between 1 and 3 mm so that they can be applied to the edge of the at least one lens 214, 215 without protruding beyond their thickness. In this way no visible alteration is introduced in the shape of the frame 210 and of the at least one lens 214, 215. The aesthetics of the eyewear 100 is unaltered by the introduction of the eye-tracking system 200.

The eye-tracking system 200 is compatible with any class of lens in terms of material, color, ophthalmic correction etc.

Preferably, the infrared photodetecros 220 are applied to the edge of the at least one lens 214, 215 by means of an optical glue, that is a glue that allows to obtain a high optical coupling between the edge of the at least one lens 214, 215 surface and the infrared photodetector 220 which is critical for the functioning of the eye-tracking system 200.

Preferably, the at least one lens 214, 215 are free of any surface treatment or components aimed at increasing the light guiding effect and/or the absorprion at the edges of light at the infrared and/or near infrared wavelengths.

As a first alternative, one or more layers of additional coatings, for example interferometric layers or dielectric dots or lenslets (tiny lenslets adopted for example for myopia control), can be provided by deposition on the surface of the at least one lens 214, 215 in order to increase the light guiding effect at the infrared and/or near infrared wavelengths.

As a second alternative, one or more layers of metamaterials, for example metamaterials transparent in the visible spectrum and reflective in the infrared and near infrared wavelengths, can be provided by deposition on the surface of the at least one lens 214, 215 in order to increase the light guiding effect at the infrared and/or near infrared wavelengths.

As a third alternative the at least one lens 214, 215 may comprise a plurality of nanoparticles which absorbs the incoming infrared and/or near-infrared light and re-emit light isotropically at slightly lower energy increasing the absorption at the edges of the at least one lens 214, 215.

A fourth alternative is the deposition on the at least one lens 214, 215 of specific masks, also called coded aperture, which are transparent in the visible spectrum and which include patterns comprising both transparent and opaque to the infrared light regions in order to improve the sensitivity to the orientation of the impinging light (analogously to what performed with scintillators in gamma-ray detection).

The eye-tracking system 200 may be provided also in a head-mountable device. In such a case the head-mountable device comprises a frame configured to be mounted on a head, at least one lens coupled to the frame so as to be positioned in front of at least one eye and an eye-tracking system 200 associated to the frame wherein the eye-tracking system and the at least one lens may be made as previously described.

From the description made, the characteristics of the eyewear, object of the present invention, are clear, as are the relative advantages.

Indeed such an eyewear is provided with an eye-tracking system that does not need to modify the shape of the frame of a common eyewear, since the photodectors are optically coupled to the edges of the lenses without protruding beyond their thickness. Moreover, the eye-tracking system does not need a special treatment to be made on the lens surfaces but it may work also with common lenses.

Finally, it is clear that the eyewear thus conceived is susceptible of numerous modifications and variations, all of which are within the scope of the invention; moreover, all the details may be replaced by technically equivalent elements. In practice, the materials used, as well as their dimensions, can be of any type according to the technical requirements.

## Claims

1. Eyewear (100) comprising:
- a frame (110) comprising a front (111), two temples (112, 113) coupled to the front (111) and at least one lens (114, 115) coupled to the front (111);
- an eye-tracking system (200) associated to the frame (110);
**characterized in that** the eye-tracking system (200) comprises:
- at least one infrared radiation source (210, 211) coupled to the frame (110) so as to face and emit infrared radiation towards a respective eye to be tracked of a user when such a user wears the eyewear (100);
- a plurality of infrared photodetectors (220) optically coupled to the at least one lens (114, 115), said infrared photodetectors (220) being configured to detect the optical signal reflected by the eye to be tracked and generate a respective an electric detection signal;
- a processing and control unit (230) associated to the at least one infrared radiation source (210, 211) and to the plurality of infrared photodetectors (220), said processing and control unit (230) being configured to activate the at least one infrared radiation source (210, 211) so as to emit the infrared radiation, to receive the electric detection signals and to estimate the direction of the gaze of the eye to be tracked on the basis of said received electric detection signals.

2. Eyewear (100) according to claim 1 wherein the infrared photodetectors (220) are mechanically coupled to the edge of the at least one lens (114, 115) or to the inner edge of the front (111) of the frame (110) facing the edge of the at least one lens (114, 115).

3. Eyewear (100) according to claim 1 or 2 -comprising a battery (240) associated to the processing and control unit (230), the infrared photodetectors (220) and to the at least one infrared radiation source (210, 211) so as to electrically supply them.

4. Eyewear (100) according to one or more of the previous claims wherein the infrared photodetectors (220) optically coupled to the edge of the at least one lens (114, 115) are at least three.

5. Eyewear (100) according to one or more of the claims from 1 to 4 wherein the infrared photodetectors (220) optically coupled to the edge of the at least one lens (114, 115) are four.

6. Eyewear (100) according to one or more of the claims from 2 to claim 5 wherein the processing and control unit (230) and the battery (240) are mounted in two different temples (112, 113).

7. Eyewear (100) according to one or more of the previous claims wherein the processing and control unit (230) comprises an internal memory wherein a computer program is loaded, said computer program implementing an algorithm to estimate the direction of the gaze of the eye to be tracked on the basis of the received electric detection signals, said algorithm being a supervised machine learning algorithm.

8. Eyewear (100) according to one or more of the previous claims wherein the eye tracking system (200) comprises a system of photovoltaic cells adapted to recharge the battery (240).

9. Eyewear (100) according to one or more of the previous claims wherein the infrared photodetectors (220) are applied to the edge of the at least one lens (214, 215) by means of an optical glue.

10. Eyewear (100) according to one or more of the previous claims wherein the at least one lens (214, 215) are free of any surface treatment or components aimed at increasing the light guiding effect and/or the absorption at the edges of light at the infrared and/or near infrared wavelengths.

11. Eyewear (100) according to one or more of the claims from 1 to 9 wherein one or more layers of additional coatings or dielectric dots or lenslets are provided by deposition on the surface of the at least one lens (214, 215) in order to increase the light guiding effect at the infrared and/or near infrared wavelengths.

12. Eyewear (100) according to one or more of the claims from 1 to 9 wherein one or more layers of metamaterials are provided by deposition on the surface of the at least one lens (214, 215) in order to increase the light guiding effect at the infrared and/or near infrared wavelengths.

13. Eyewear (100) according to one or more of the claims from 1 to 9 wherein the at least one lens (214, 215) comprises a plurality of nanoparticles which absorbs the incoming infrared and/or near-infrared light and re-emit light isotropically at slightly lower energy increasing the absorption at the edges of the at least one lens (214, 215).

14. Eyewear (100) according to one or more of the claims from 1 to 9 wherein the at least one lens (214, 215) comprises a coded-aperture mask in the IR spectrum to enhance the spatial resolution.

15. Head-mountable device comprising:
- a frame configured to be mounted on a head and at least one lens coupled to the frame so as to be positioned in front of at least one eye of a user;
- an eye-tracking system (200) associated to the frame; **characterized in that** the eye-tracking system (200) comprises:
- at least one infrared radiation source (210, 211) coupled to the frame (110) so as to face and emit infrared radiation towards a respective eye to be tracked of a user when such a user wears the eyewear (100);
- a plurality of infrared photodetectors (220) optically coupled to the edge of the at least one lens (114, 115), said infrared photodetectors (220) being configured to detect the optical signal reflected by the eye to be tracked and generate a respective an electric detection signal;
- a processing and control unit (230) associated to the at least one infrared radiation source (210, 211) and to the plurality of infrared photodetectors (220), said processing and control unit (230) being configured to activate the at least one infrared radiation source (210, 211) so as to emit the infrared radiation, to receive the electric detection signals and to estimate the direction of the gaze of the eye to be tracked on the basis of said received electric detection signals.
